Europäisches Patentamt

European Patent Office

Office européen des brevets

(11) Publication number: **0 118 287**
**B1**

(12) **EUROPEAN PATENT SPECIFICATION**

(45) Date of publication of patent specification: **01.06.88**

(51) Int. Cl.⁴: **B 60 G 13/00, F 16 F 9/32**

(21) Application number: **84301351.7**

(22) Date of filing: **01.03.84**

(54) Vehicle suspension strut.

(30) Priority: **02.03.83 US 471509**

(43) Date of publication of application:
**12.09.84 Bulletin 84/37**

(45) Publication of the grant of the patent:
**01.06.88 Bulletin 88/22**

(84) Designated Contracting States:
**BE DE FR GB IT**

(56) References cited:
**EP-A-0 023 968**
**FR-A-2 163 323**
**FR-A-2 374 566**
**FR-A-2 463 016**

(73) Proprietor: **MAREMONT CORPORATION**
**200 East Randolph Drive**
**Chicago, IL 60601 (US)**

(72) Inventor: **Kobiske, Michael H.**
**36 West 425 River Grange Road**
**St. Charles Illinois 60174 (US)**
Inventor: **Voight, William E.**
**1510 Avalon Court**
**St. Charles Illinois 60174 (US)**
Inventor: **Sharma, Kris C.**
**33 North Main Street Apt. 9J**
**Lombard Illinois 60148 (US)**

(74) Representative: **Bowman, Paul Alan et al**
**LLOYD WISE, TREGEAR & CO. Norman House**
**105-109 Strand**
**London WC2R OAE (GB)**

Courier Press, Leamington Spa, England.

## Description

This invention relates to vehicle suspension struts. Such struts are commonly adapted to support bracket plates upon which vehicle components are mounted.

Vehicle suspension strut bodies have brackets used to secure functional lines such as brake lines or cables, to the strut bodies. The brackets prevent chafing of the functional lines, assure the lines rotate about the longitudinal strut axes as vehicle wheels are turned during cornering, and prevent undue stress at the connections between the lines and their fittings. In the past, functional line brackets have been asymmetrically mounted on vehicle suspension strut bodies, such that the bodies have been uniquely right or left hand. A desire to avoid interference between strut bodies and other vehicle components may have caused the asymmetry. As a a result of the asymmetry, inventories for vehicle suspensions have required unique stocks of both right and left hand strut bodies, to be complete.

The present invention seeks to eliminate the need for stocking right and left hand strut bodies of the above type.

FR—A—2163323 discloses a vehicle suspension strut member which comprises a tubular strut outer cylinder and a single functional bracket in the cylinder, the bracket including an arcuate central portion fitted to the cylinder and extending circumferentially about a portion thereof. The bracket includes a tab portion, for attachment of a functional line, provided on one side of its arcuate central portion and extending away from the outer cylinder of the strut member, and also a notched plate, for ensuring exact positioning of the strut member, provided on the opposite side of its arcuate central portion and also extending outward away from the outer cylinder of the strut member. It will be apparent that the vehicle suspension strut member disclosed in FR—A—2163323 does not eliminate the need for stocking right and left hand strut bodies.

The present invention provides, in one aspect (disclosed in claim 1), a left-to-right interchangeable vehicle suspension strut member. A tubular strut outer cylinder has an exterior. A functional bracket is on the cylinder exterior. The bracket includes an arcuate central portion and two end portions. The central portion fits about the cylinder exterior, extending circumferentially about a portion of the cylinder. The first end portion is attached to the central portion, and extends outward away from the cylinder exterior a non-interfering distance. The second end portion is attached to the central portion opposite the first end portion and also extends outward away from the cylinder exterior a non-interfering distance. A functional bracket plate is adapted to be received by the bracket end portion. A mounting means is on the functional brackets and the bracket plate for interchangeably mounting the functional bracket plate to one of the end portions of the functional bracket.

Alternatively, two functional brackets may be provided on the tubular strut outer cylinder in place of the single functional bracket of the above defined strut member. In this arrangement, one of the end portions for mounting the bracket plate is provided by one of the brackets and the other end portion on which the bracket plate can be mounted is provided by the second bracket.

Thus, according to the second aspect of the invention (disclosed in claim 3), a vehicle suspension strut has an outer cylinder upon which is mounted either one or two functional brackets so that there are in total two end portions each adapted to support a functional bracket plate. The disposition of the bracket or brackets is such that each end portion is located with respect to the outer cylinder in either a right hand or a left hand orientation. Thus, the suspension strut may be used in either left or right hand positions on a vehicle.

A suspension strut according to the invention can avoid interference with other vehicle components when it is installed. Further, such struts can be substantially equal to prior art strut bodies in price and performance as to functional lines, brackets and bracket attachments.

Two embodiments of the invention will now be described by way of example and with reference to the accompanying drawings wherein:

Figure 1 is a perspective view of a front strut body including a preferred front brake line bracket assembly;

Figure 2 is a partial side view of the front strut body of Figure 1;

Figure 3 is a cross-section view of the front strut body of Figures 1 and 2, taken along line 3—3 of Figure 2;

Figure 4 is a perspective view of the front strut body of Figures 1 to 3, with a front brake line bracket assembly exploded;

Figure 5 is a perspective view of a rear strut body including a rear brake line bracket assembly;

Figure 6 is a partial side view of the rear strut body of Figure 5; and

Figure 7 is a cross-section view of the rear strut body of Figures 5 and 6, taken along line 7—7 of Figure 6.

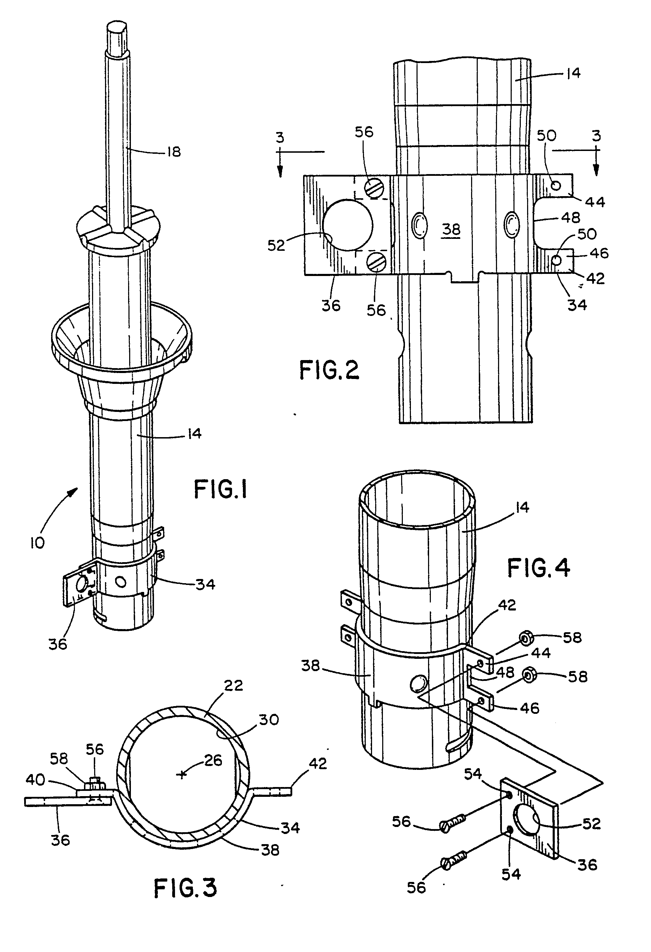

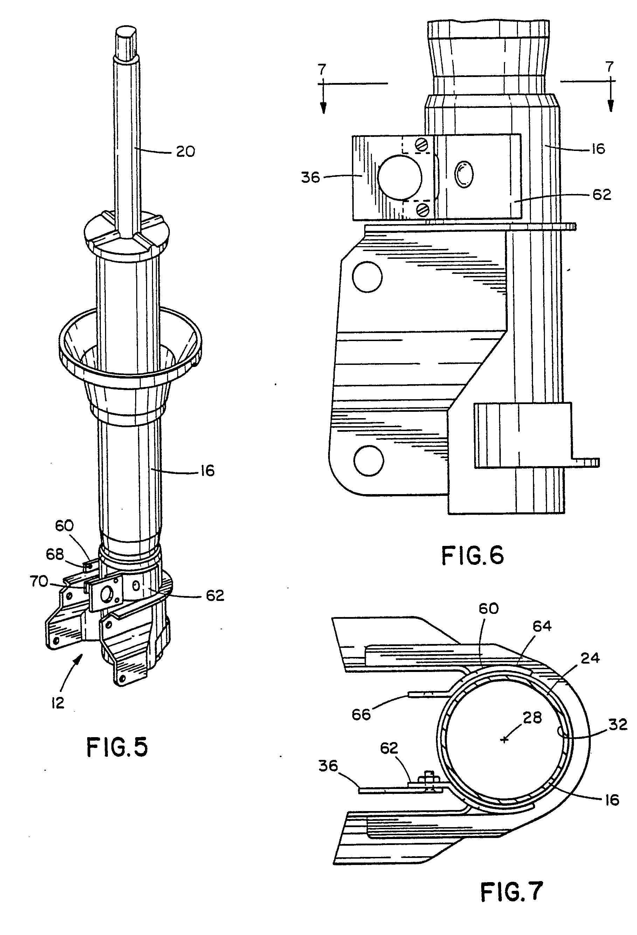

Referring to Figures 1 and 5 of the accompanying drawings, a preferred strut body 10 and a preferred rear strut body 12 include tubular strut outer cylinders 14, 16 with rods 18, 20, respectively. The cylinders 14, 16 are elongated, cylindrical, and as shown in Figures 3 and 7, include, respectively, thin, circular cylinder walls 22, 24 centered about strut centrelines 26, 28 within hollow interiors 30, 32.

A preferred front brake line bracket assembly shown in Figures 1 to 4 includes a front brake line bracket 34 and a brake line bracket plate 36. An arcuate or partially annular central portion 38 of the bracket 34 is fitted and mounted to the exterior of the front cylinder 14 at the lower end of the cylinder 14. The central portion 38 extends circumferentially around a portion of the cylinder exterior, in contact with the cylinder wall 22. As best seen in Figure 3, the circumferential extent of the central portion 38 is less than semicircular, or about 145°. The centre of curvature of the central portion 38 is the strut centreline 26.

Planar end portions 40, 42 of the bracket 34 extend from the opposite ends of the central portion 38 outward, away from the cylinder 14, in a single plane parallel to the strut centreline 26. The end portions 40, 42 are attached to the central portion 38, as integral portions of the bracket 34. Referring to the end portion 42 as an example, each end portion 40, 42 includes two mounting tabs 44, 46 separated from each other across a rectangular opening 48. Fastener mounting holes 50 are provided in the tabs 44, 46.

The bracket 34 is symmetric about the strut centreline 26. The end portions 40, 42 join the central portion 38 equidistant from the centreline 26, and each end portion 40, 42 ends at a single, non-interfering distance from the cylinder wall 22. As most preferred, the tabs 44, 46 of the end portions 40, 42 extend from the wall 22 only so far, and are only so wide, as necessary for strength about the fastener holes 50.

The bracket plate 36 is rectangular and most preferably square, with a centered brake line opening 52. Two fastener holes 54 are adjacent the brake line opening 52, at a distance apart from each other equal to the distance between the bracket fastener holes 50. The plate 36 is thus adapted to receive and hold a brake line, and to be mounted interchangeably on one of the end portions 40, 42 of the bracket 34. Interchangeable mounting of the plate 36 is defined as the mounting of the plate 36 to either of the end portions 40, 42, as desired, with the same ease of mounting. Comparing Figure 4 to Figures 1 to 3, the plate 36 is mountable on either of the portions 40, 42. Fasteners such as the bolts 56 and nuts 58 of Figure 4 provide the mounting.

When mounted, the plate 36 extends outward of the tabs 44, 46. The brake line opening 52 is properly positioned to receive a brake line. Because the plate 36 is mountable on either of bracket end portion 40, 42, the cylinder 14 is left-to-right interchangeable. It may be used in either a left hand strut assembly, or a right hand strut assembly.

A preferred rear brake line bracket assembly shown in Figures 5 to 7 includes two rear brake line brackets 60, 62 and the brake line bracket plate 36. Referring to the bracket 60 as an example, the brackets 60, 62 each include an abbreviated arcuate portion 64 fitted to and extending circumferentially about a portion of the exterior of the rear cylinder 16, with an end portion 66 of two spaced tabs 68, 70 extending away from the cylinder exterior. The end portions 66 of the brackets 60, 62 extend parallel to each other and to the centreline 28. Remaining details of the brackets 60, 62 are similar to those of the bracket 34.

Preferred, front and rear brake line bracket assemblies in left-to-right interchangeable, vehicle suspension strut members are now described. Various modifications may be made to the assemblies. As an example, the circumferential extent of the central portion 38 of the bracket 34 may be increased beyond 180°. The bracket 34 may be asymmetrical about the strut centreline 26. The bracket plate 36 may be any desired, suitable shape.

**Claims**

1. A vehicle suspension strut member comprising a tubular strut outer cylinder (14) and a functional bracket (34) on the cylinder (14), the bracket (34) including an arcuate central portion (38) fitted to the cylinder (14) and extending circumferentially about a portion of the strut outer cylinder (14), a first portion (40) attached to the arcuate central portion (38) and extending outward away from the cylinder (14) a non-interfering distance, and a second portion (42) attached to the arcuate central portion (38) opposite the first portion (40) and extending outward away from the cylinder (14) a non-interfering distance; characterized in that said first portion (40) and said second portion (42) are provided respectively at each end of said arcuate central portion (38), and in that a functional bracket plate (36) is adapted to be received by a bracket end portion (40, 42), means (50, 54, 56, 58) being provided for interchangeably mounting the functional bracket plate (36) to either one of the end portions (40, 42) of the functional bracket (34).

2. A strut member according to Claim 1 characterized in that the strut outer cylinder (14) defines a strut centreline (26), in that the functional bracket (34) is symmetrical about the strut centreline (26), the functional bracket end portions (40, 42) extending in a single plane parallel to the strut centreline (26), and in that the functional bracket plate (36) defines a plate centreline and is symmetrical thereabout, the mounting means including a plurality of identical fasteners (56, 58).

3. A vehicle suspension strut member comprising a tubular strut outer cylinder (16) and a first functional bracket (60 or 62) on the cylinder (16), said first bracket (60 or 62) including an arcuate central portion (64) fitted to the cylinder (16) and extending circumferentially about a first portion of the strut outer cylinder (16), and a portion (66) attached to thhe arcuate portion (64) and extending outward away from the cylinder (16) a non-interfering distance, characterized in that there is a second functional bracket (60 or 62) on the cylinder, said functional bracket including an arcuate central portion (64) fitted to the cylinder (16) and extending circumferentially about a second portion of the strut outer cylinder, and a portion (66) attached to the arcuate portion (64) and extending outward away from the cylinder (16) a non-interfering distance, said portions (66) of said first and second brackets (60, 62) being provided respectively at an end of said arcuate central portion (64) of said brackets (60, 62); and in that a functional bracket plate (36) is adapted to be received by a bracket end portion (66), means being provided for interchangeably mounting the functional bracket plate (36) to either one of the end portions (66) of the functional brackets (60, 62).

4. A strut member as in Claim 3 characterized in that the strut outer cylinder (16) defines a strut centreline (28), in that the functional brackets (60, 62) are symmetrical about the strut centreline (28), the functional bracket end portions (66) extending in two planes parallel to each other and the strut centreline (28), and in that the functional bracket plate (36) defines a plate centreline and is symmetric thereabout, the mounting means including a plurality of identical fasteners.

## Patentansprüche

1. Aufhängungsstrebeteil für Fahrzeuge bestehend aus einem äußeren Zylinder der rohrförmigen Strebe und einer Funktionshalterung (34) am Zylinder (14), die einen bogenförmigen Mittelabschnitt (38) besitzt, der dem Zylinder (14) angepaßt ist und sich über den Umfang um einen Abschnitt des äußeren Zylinders (14) der Strebe erstreckt, wobei ein erster Abschnitt (40) am bogenförmigen Mittelabschnitt (38) befestigt ist und sich nach außen vom Zylinder (14) weg mit einem nicht störenden Abstand erstreckt und wobei ein zweiter Abschnitt (42) am bogenförmigen Mittelabschnitt (38) gegenüber dem ersten Abschnitt (40) liegt und sich nach außen vom Zylinder (14) weg mit einem nicht störenden Abstand erstreckt, dadurch gekennzeichnet, daß der erste Abschnitt (40) und der zweite Abschnitt (42) jeweils an jedem Ende seines bogenförmigen Mittelabschnitts (38) vorgesehen ist und daß eine Funktionshalterungsplatte (36) ausgebildet ist, um von einem Halterungsendabschnitt (40, 42) aufgenommen zu werden, wobei Mittel (50, 54, 56, 58) zum austauschbaren Einsetzen der Funktionshalterungsplatte (36) an sowohl dem einen als auch dem anderen Endabschnitt (40, 42) der Funktionshalterung (34) vorgesehen sind.

2. Strebeteil nach Anspruch 1, dadurch gekennzeichnet, daß der äußere Zylinder (14) eine Strebemittellinie (26) genau bezeichnet, daß die Funktionshalterung (34) um die Strebemittellinie (26) symmetrisch ist, wobei die Funktionshalterungsendabschnitte (40, 42) sich in einer einzigen Ebene parallel zur Strebemittellinie (26) erstrecken, und daß die Funktionshalterungsplatte (36) eine Plattenmittellinie genau bezeichnet und um diese symmetrisch ist, wobei die Befestigungsmittel mehrere baugleiche Verbindungselemente (56, 58) aufweisen.

3. Aufhängungsstrebeteil für Fahrzeuge bestehend aus einem äußeren Zylinder (16) der rohrförmigen Strebe und einer ersten Funktionshalterung (60 oder 62) am Zylinder (16), die einen bogenförmigen Mittelabschnitt (64) besitzt, der dem Zylinder (16) angepaßt ist und sich über den Umfang um einen ersten Abschnitt des äußeren Zylinders (16) der Strebe erstreckt, wobei ein Abschnitt (66) am bogenförmigen Abschnitt (64) befestigt ist und sich nach außen vom Zylinder (16) weg mit einem nicht störenden Abstand erstreckt, dadurch gekennzeichnet, daß es am Zylinder eine zweite Funktionshalterung (60 oder 62) gibt, die einen bogenförmigen, dem Zylinder (16) angepaßten Mittelabschnitt (64) aufweist und sich über den Umfang um einen zweiten Abschnitt des äußeren Zylinders der Strebe erstreckt, wobei ein Abschnitt (66) am bogenförmigen Abschnitt (64) befestigt ist und sich nach außen vom Zylinder (16) weg mit einem nicht störenden Abstand erstreckt und diese Abschnitte (66) der ersten und der zweiten Halterung (60, 62) jeweils an einem Ende des bogenförmigen Mittelabschnitts (64) der Halterungen (60, 62) vorgesehen sind, und daß eine Funktionshalterungsplatte (36) ausgebildet ist, von einem Halterungsendabschnitt (66) aufgenommen zu werden, wobei Mittel zum austauschbaren Einsetzen der Funktionshalterungsplatte (36) an sowohl dem einen als auch dem anderen Endabschnitt (66) der Funktionshalterung (60, 62) vorgesehen sind.

4. Strebeteil nach Anspruch 3, dadurch gekennzeichnet, daß der äußere Zylinder (16) der Strebe eine Strebemittellinie (28) genau bezeichnet, daß die Funktionshalterungen (60, 62) um die Strebemittellinie (28) symmetrisch sind, wobei die Funktionshalterungsendabschnitte (66) sich in zwei Ebenen parallel zueinander und zur Strebemittellinie (28) erstrecken, und daß die Funktionshalterungsplatte (36) eine Plattenmittellinie genau bezeichnet und um diese symmetrisch ist, wobei die Befestigungsmittel mehrere baugleiche Verbindungselemente aufweisen.

## Revendications

1. Organe formant jambe de suspension de véhicule, comportant un cylindre extérieur tubulaire (14) de jambe de suspension et un support fonctionnel (34) sur le cylindre (14), le support (34) présentant une portion central en arc (38) montée sur le cylindre (14) et s'étendant circonférentiellement autour d'une portion du cylindre extérieur (14) de la jambe de suspension, une première portion (40) attachée à la portion centrale en arc (38) et s'étendant vers l'extérieur, en s'éloignant du cylindre (14), sur une distance ne provoquant pas d'interférence, ainsi qu'une seconde portion (42) attachée à la portion central en arc (38), du côté opposé à la première portion (40), et s'étendant vers l'extérieur en s'éloignant du cylindre (14), sur une distance ne provoquant pas d'interférence; caractérisé en ce que ladite prémière portion (40) et ladite seconde portion (42) sont respectivement prévues à chaque extrémité de ladite portion centrale en arc (38); et en ce qu'une plaquette (36) de support fonctionnel est prévue pour être reçue par une portion d'extrémité (40, 42) du support, des moyens (50, 54, 56, 58) étant prévus pour permettre de monter, de façon interchangeable, la plaquette (36) de support fonctionnel sur l'une ou l'autre des portions d'extrémité (40, 42) du support fonctionnel (34).

2. Organe formant jambe de suspension selon la revendication 1, caractérisé en ce que le cylindre extérieur (14) de la jambe de suspension définit un axe (26) de jambe de suspension; en ce que le support fonctionnel (34) est symétrique par rapport à l'axe (26) de la jambe de suspension, les portions d'extrémité (40, 42) du support fonctionnel s'étendant dans un même plan parallèle à l'axe (26) de la jambe de suspension; et en ce que la plaquette (36) de support fonctionnel définit un axe de plaquette et est symétrique par rapport à cet axe, les moyens de montage incluant plusieurs éléments de fixation (56, 58) identiques.

3. Organe formant jambe de suspension de véhicule comportant un cylindre extérieur tubulaire (16) de jambe de suspension et un premier support fonctionnel (60 ou 62) sur le cylindre (16), ledit premier support (60 ou 62) présentant une portion centrale en arc (64) montée sur le cylindre (16) et s'étendant circonférentiellement autour d'une première portion du cylindre extérieur (16) de la jambe de suspension, ainsi qu'une portion (66) attachée à la portion en arc (64) et s'étendant vers l'extérieur en s'éloignant du cylindre (16), sur une distance ne provoquant pas d'interférence, caractérisé en ce qu'il y a un second support fonctionnel (62 ou 60) sur le cylindre, ledit second support fonctionnel présentant une portion centrale en arc (64) montée sur le cylindre (16) et s'étendant circonférentiellement autour d'une seconde portion du cylindre extérieur de la jambe de suspension, ainsi qu'une portion (66) attachée à la portion en arc (64) et s'étendant vers l'extérieur en s'éloignant du cylindre (16), sur une distance ne provoquant pas d'interférence, lesdites portions (66) dudit premier support et dudit second support (60, 62) étant prévues respectivement à une extrémité de ladite portion centrale en arc (64) desdits supports (60, 62); et en ce qu'une plaquette (36) de support fonctionnel est prévue pour être reçue par une portion d'extrémité (66) du support, des moyens étant prévus pour permettre de monter, de façon interchangeable, la plaquette (36) de support fonctionnel sur l'une ou l'autre des portions d'extrémité (66) des supports fonctionnels (60, 62).

4. Organe formant jambe de suspension selon la revendication 3, caractérisé en ce que le cylindre extérieur (16) de la jambe de suspension définit un axe (28) de la jambe de suspension; en ce que les supports fonctionnels (60, 62) sont symétriques par rapport à l'axe (28) de la jambe de suspension, les portions d'extrémité (66) des supports fonctionnels s'étendant dans deux plans parallèles l'un à l'autre et à l'axe (28) de la jambe de suspension; et en ce que la plaquette (36) de support fonctionnel définit un axe de plaquette et est symétrique par rapport à cet axe, les moyens de montage incluant plusieurs éléments de fixation identiques.

FIG.1

FIG.2

FIG.3

FIG.4

FIG.5

FIG.6

FIG.7